(19) Europäisches Patentamt
European Patent Office
Office européen des brevets

(11) EP 2 040 037 A2

(12) EUROPEAN PATENT APPLICATION

(43) Date of publication:
25.03.2009 Bulletin 2009/13

(51) Int Cl.:
$G01C\ 21/28$ $^{(2006.01)}$

(21) Application number: 08016630.9

(22) Date of filing: 22.09.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 21.09.2007 JP 2007245793

(71) Applicant: YAMAHA CORPORATION
Hamamatsu-shi,
Shizuoka-ken 430-8650 (JP)

(72) Inventors:
• Sato, Hideki
Hamamatsu-shi
Shizuoka-ken (JP)
• Handa, Ibuki
Hamamatsu-shi
Shizuoka-ken (JP)

(74) Representative: HOFFMANN EITLE
Patent- und Rechtsanwälte
Arabellastraße 4
81925 München (DE)

(54) **Navigation device**

(57)    In a navigation device, the position $P_{GPS}$, the running speed V, and the running direction $\varphi$ are detected based on the Global Positioning System (GPS), while the bearing $\theta$ is detected based on geomagnetism. The bearing $\theta$ is corrected using the difference $\delta = \theta - \varphi$ so as to produce the corrected bearing $\theta c$. The present position $P_{MAG}$ is calculated based on the corrected bearing $\theta c$ as well as the position $P_{GPS}$ and the running speed V which are previously detected. Thus, it is possible to precisely detect the present position $P_{MAG}$ without errors due to deviations between the running direction $\varphi$ and the bearing $\theta$.

FIG. 2

EP 2 040 037 A2

**Description**

BACKGROUND OF THE INVENTION

Field of the Invention

The present invention relates to navigation devices that are installed in vehicles so as to indicate present locations.

The present application claims priority on Japanese Patent Application No. 2007-245793, the content of which is incorporated herein by reference.

Description of the Related Art

Conventionally, two types of navigation devices are provided for detecting present positions of vehicles so as to perform positional guidance (or travel guidance) for users, i.e., fixed types which are fixedly installed in vehicles via wirings, and handy or portable types which can be easily handled by users to carry outside and which may be referred to as personal navigation devices (PDN). Recently, fixed types of navigation devices (an example of which is disclosed in Patent Document 1) have been developed such that bearings detected by gyro-sensors or geomagnetic sensors and vehicle information such as running speeds of vehicles (detected by speedometers) are used in addition to GPS signals (where GPS stands for Global Positioning System) so as to detect present locations of vehicles with high precisions. Such functions may be highly evaluated in the case where navigation devices cannot receive GPS signals or in the case where GPS signals do not have high precisions.
Patent Document 1: Japanese Unexamined Patent Application Publication No. H09-42979

It is not always easy for portable navigation devices to receive vehicle information given from instruments on dashboards of vehicles. To cope with the case in which portable types of navigation devices cannot receive GPS signals, auxiliary functions are installed in them so as to detect positions by integrating accelerations detected by acceleration sensors, for example. Generally speaking, acceleration sensors cannot distinguish accelerations and inclinations applied to vehicles. For this reason, portable navigation devices using acceleration sensors are disadvantageous in that they are degraded in precisions for detecting running speeds and positions of vehicles.

Similar to fixed types of navigation devices, it may be possible for portable navigation devices to use geomagnetic sensors for detecting the bearings of vehicles. Due to the portability of portable navigation devices, when they are installed in vehicles, it is uncertain for users to acknowledge angle differences between directions of geomagnetic sensors (i.e. bearings indicated by geomagnetic sensors) and running directions of vehicles (i.e. front-forward directions of vehicles); hence, it is very difficult to accurately determine bearings indicated by running directions of vehicles based on output signals of geomagnetic sensors. That is, in the case where portable navigation devices cannot receive GPS signals, they may suffer from errors in detecting positions of vehicles.

SUMMARY OF THE INVENTION

It is an object of the present invention to provide a navigation device which can detect a present position with high precision by correcting deviations between the running direction of a vehicle and the bearing of a geomagnetic sensor in a navigation device.

A navigation device of the present invention is designed to detect the position thereof so as to perform positional guidance and is constituted of a first detection device (e.g. a GPS unit) for detecting the position based on the Global Positioning System (GPS) and for detecting the running direction and the running speed based on a plurality of positions sequentially detected at different times, a second detection device (e.g. a magnetic sensor) for detecting the bearing thereof based on geomagnetism, a bearing correction unit for correcting the bearing of the second detection device by use of the difference between the running direction detected by the first detection device and the bearing detected by the second detection device, thus producing the corrected bearing, and a position calculation means for calculating the present position based on the corrected bearing as well as the position and the running speed which are previously detected by the first detection device.

Since the navigation device is designed to correct the bearing of the second detection device based on the difference between the running direction and the bearing, it is possible to precisely detect the front-forward direction in which a vehicle actually runs. Even when the first detection device does not receive GPS signals from stationary satellites, it is possible to precisely calculate the present position by use of the position and running speed as well as the corrected bearing. This calculation is established on the presumption that the running speed is constant.

It is possible to further install a storage unit for storing the position and the running speed detected by the first detection device in the navigation device. That is, when the first detection device does not receive GPS signals and thus cannot detect the position, it is possible for the position calculation unit to precisely calculate the present position based on the corrected bearing corrected by the bearing correction unit as well as the position and the running speed previously stored in the storage unit. In short, the navigation device is capable of precisely detecting the present position without receiving GPS signals.

It is possible to further install a precision determination unit for detecting the precision of the first detection device in detecting the position in the navigation device, wherein the bearing correction unit corrects the bearing by use of the difference which is calculated only when the precision determination unit determines that the first detection device detects the position at a high precision.

As described above, the present invention is characterized in that the difference is calculated using the running direction which is detected by the first detection device with high precision, while the difference is not calculated using the running direction which is detected by the first detection device with low precision. Generally speaking, the positional detection based on GPS may suffer from deviations of precisions which depend upon the running speed and the number of GPS signals actually received by the first detection device. To cope with such a drawback, the present invention is design to introduce only a certain value of the running direction, which is detected by the first detection device with high precision, into calculation of the difference. This improves the reliability of the bearing correction unit in correcting the bearing of the second detection device by use of only a certain value of the running speed which is detected by the first detection device at a high precision.

In the navigation device, the precision determination unit determines that the first detection device detects the running speed with high precision only when the running speed is above the prescribed threshold.

In the case of low running speed (or in the case of stoppage), the first detection device may experience large dispersions in detecting the running direction due to errors of positional detection based on GPS. In the case of high running speed, errors of positional detection (which may affect the detection of the running direction) relatively decrease while the precision of detecting the running direction relatively increases. Based on such observations, the precision of the positional detection (performed by the first detection device) is counted as an important factor for the calculation of the difference between the bearing and the running direction. Thus, it is possible to improve the reliability in correcting the bearing of the second detection device.

It is possible to produce an average difference among a plurality of differences which are sequentially calculated at the respective times, wherein the bearing correction unit corrects the bearing of the second detection device by use of the average difference. That is, the bearing correction unit performs averaging on differences with respect to time. Thus, it is possible to improve the reliability in correcting the bearing of the second detection device even when the navigation device unexpectedly moves in a lapse of time or even when the output signals of the second detection device fluctuate due to disturbance (which may be caused by magnetism generated by buildings and the like other than geomagnetism).

As described above, the present invention is designed to detect the bearing precisely matching the running direction; hence, it is possible to precisely detect the present position without receiving GPS signals.

BRIEF DESCRIPTION OF THE DRAWINGS

These and other objects, aspects, and embodiments of the present invention will be described in more detail with reference to the following drawings.

FIG. 1 is a block diagram showing the constitution of a navigation device in accordance with a preferred embodiment of the present invention.

FIG. 2 is a block diagram showing the detailed constitution for implementing a position calculation process of the navigation device.

FIG. 3 is a flowchart showing the position calculation process for calculating a present position based on a running direction which is determined by correcting a bearing.

DESCRIPTION OF THE PREFERRED EMBODIMENT

The present invention will be described in further detail by way of examples with reference to the accompanying drawings.

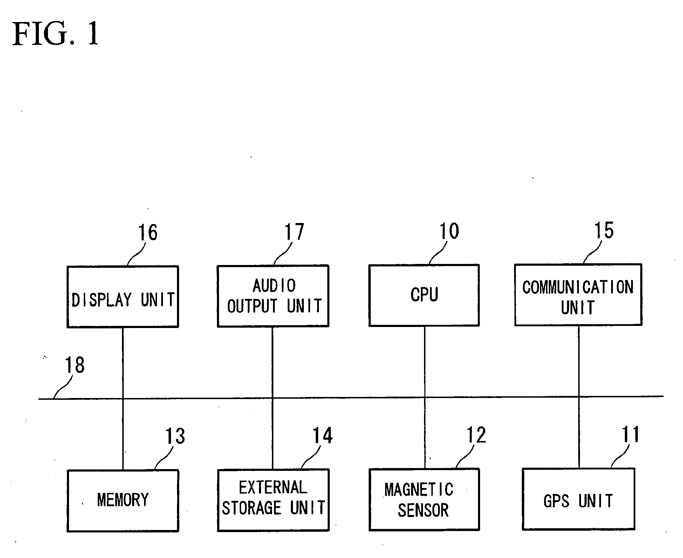

FIG. 1 is a block diagram showing the constitution of a navigation device 1 in accordance with a preferred embodiment of the present invention. The navigation device 1 is constituted of a CPU 10, a GPS unit 11, a magnetic sensor 12, a memory 13, an external storage unit 14, a communication unit 15, a display device 16, and an audio output device 17, all of which are stored in a single housing, thus realizing portability of the navigation device 1. The following description is given with respect to the situation in which the navigation device 1 is used and installed in a vehicle (not shown) so as to perform positional guidance for the user of the vehicle.

In this situation, the navigation device 1 may not be precisely set in position so that the bearing indicated by the output signal of the magnetic sensor 12 does not match the front-forward direction of the vehicle (or the running direction in which the vehicle presently runs), wherein the bearing of the navigation device 1 highly depends upon the user's installation so that a certain angle deviation may occur between the bearing detected by the magnetic sensor 12 and the front-forward direction of the vehicle.

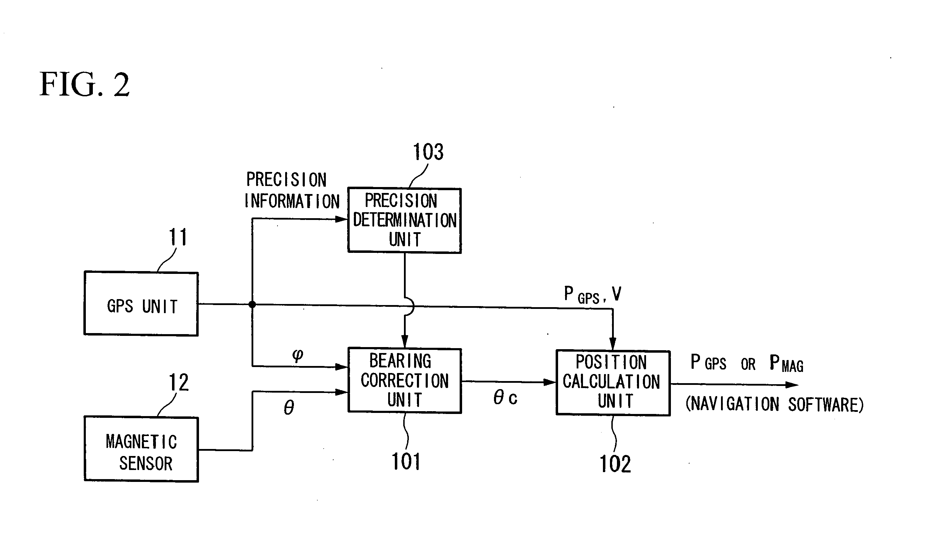

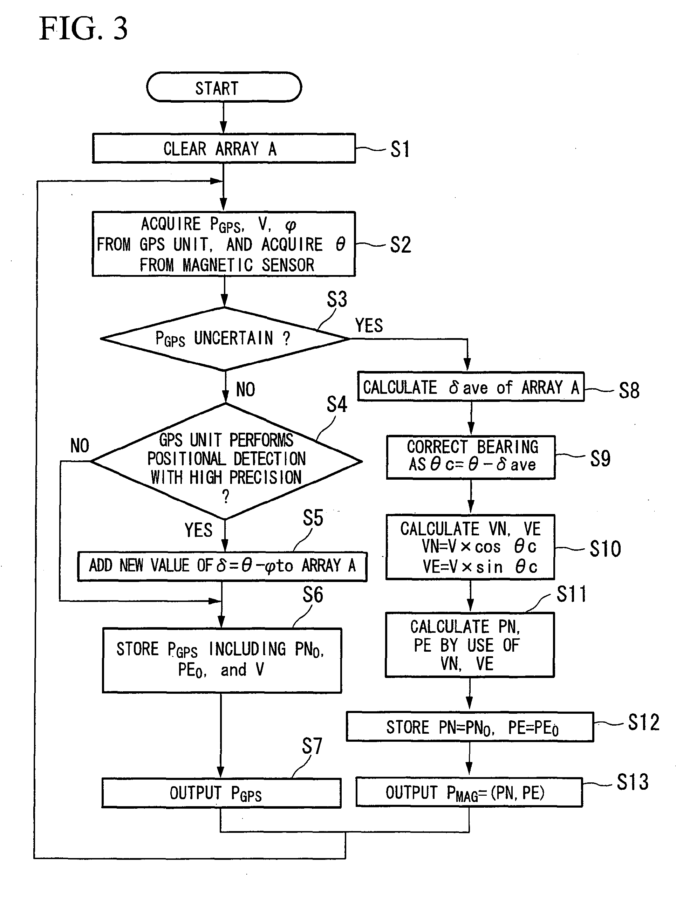

The CPU 10 loads programs stored in the memory 13 so as to control various sections of the navigation device 1 in accordance with programs. In addition, the CPU 10 performs a position calculation process (which will be described below in conjunction with FIGS. 2 and 3), in which the running direction of the vehicle is determined by correcting the bearing detected by the magnetic sensor 12 so as to calculate the present position based on the running direction, and information processing for achieving navigation function by performing positional guidance for the user of the vehicle.

The GPS unit 11 triangulates the present position of the vehicle (indicated by latitude, longitude, and altitude) by use of received signals from geostationary satellites based on the Global Positioning System (GPS), wherein it also calculates the running speed and running direction of the vehicle based on the present position presently detected and the preceding position previously detected. Thus, the GPS unit 11 outputs data representing the position, running speed, and running direction of the vehicle to the CPU 10. In the GPS, the present position is determined by way of calculations performed using reception time data representing reception times of GPS signals from satellites. The number of GPS signals of satellites received by the GPS unit 11 substantially matches the number of satellites that are presently observed in the whole sky range of the vehicle. At locations where no hindrances such as tall buildings exist in the surrounding area of the vehicle, it is possible for the GPS unit 11 to receive multiple GPS signals, for example. In urban regions having numerous buildings, the GPS unit 11 may receive only a single GPS signal. The precision for the determination of the present position depends upon the number of GPS signals actually received by the GPS unit 11. For this reason, the GPS unit 11 produces precision information (representing Dilution of Precision (DOP) modulus) based on the number of actually received GPS signals in addition to position information representing the present position thereof. The GPS unit 11 outputs the precision information and the position information to the CPU 10.

The magnetic sensor 12 detects geomagnetism so as to calculate a bearing in which the reference axis preset thereto is directed, thus producing bearing information. The bearing information is supplied to the CPU 10. As the magnetic sensor 12, it is possible to use either a two-axial magnetic sensor (which detects magnetic components in two axes, i.e. two rectangular directions) or a three-axial magnetic sensor (which detects magnetic components in three axes, i.e. three rectangular directions). In the two-axial magnetic sensor, for example, two magnetoresistive elements (for detecting magnitudes of geomagnetism) are directed differently in two directions, so that the bearing is calculated based on the magnitudes of geomagnetism. Since the user may place the navigation device 1 at a desired position and in a desired direction in the vehicle, the reference axis of the magnetic sensor 12 may not always match the front-forward direction of the vehicle; hence, the bearing (which is detected by the magnetic sensor 12 and is then output to the CPU 10) may substantially differ from the running direction of the vehicle.

The memory 13 includes a ROM (which stores programs executed by the CPU 10) and a RAM (which serves as a storage area for storing temporary data produced during the execution of programs).

The external storage unit 14 is a large-scale storage unit such as a hard-disk unit that stores map information and the like necessary for navigation.

The communication unit 15 establishes connection with the Internet via wireless communication so as to download the newest map information and the like via the Internet.

The display unit 16 graphically displays the present position and bearing of the vehicle on the map so as to implement positional guidance by way of navigation functions.

The audio output device 17 performs audio guidance via a speaker so as to generate vocalized sound instructing the user (or the driver of the vehicle) to turn the vehicle at the intersection at the appropriate timing, for example.

As described above, the navigation device 1 is designed to perform the position calculation process, in which the running direction is determined by correcting the bearing detected by the magnetic sensor 12 so as to calculate the present position thereof. FIG. 2 is a block diagram showing the detailed constitution for implementing the position calculation process in association with the GPS unit 11 and the magnetic sensor 12 shown in FIG. 1. Specifically, the position calculation process is implemented by a bearing correction unit 101, a position calculation unit 102, and a precision determination unit 103. The CPU 10 executes programs read from the memory 13 so as to implement the functions of the blocks 101, 102, and 103 shown in FIG. 2.

The bearing correction unit 101 receives data representing the running direction $\varphi(T)$ of the vehicle (given at a certain time T) from the GPS unit 11 and data representing the bearing $\theta$ of the reference axis (given at time T) from the magnetic sensor 12. It successively inputs each value of the running direction $\varphi$ and each value of the bearing $\theta$ in each time interval $\Delta T$ (where $\Delta T = 1$ second, for example). The precision determination unit 103 inputs precision information representing the precision of detecting the present position of the vehicle (which is detected by the GPS unit 11) from the GPS unit 11 at time T.

The bearing correction unit 101 sequentially stores only the input data having adequately high precisions (in detecting positions by the GPS unit 11) which are determined by the precision determination unit 103, wherein it calculates values each representing the difference $\delta(T) = \theta(T) - \varphi(T)$. The difference $\delta(T)$ represents the amount of deviation by which the bearing $\theta$ (detected by the magnetic sensor 12) deviates from the running direction $\varphi$ of the vehicle at time T. By use of the difference $\delta(T)$, the bearing correction unit 101 corrects the bearing $\theta(t)$ (at present time t) detected by the magnetic sensor 12 in accordance with equation (1).

$$\theta c(t) \quad = \theta(t) - \delta(T) \qquad \dots (1)$$

Then, the bearing correction unit 101 forwards the corrected bearing $\theta c(t)$ to the position calculation unit 102.
Alternatively, by use of the average difference $\delta ave$ representing the average value of the differences $\delta(T)$, $\delta(T+\Delta T)$, $\delta(T+2\Delta T)$, ... at the respective times T, T+$\Delta T$, T+$2\Delta T$, ..., the bearing correction unit 101 corrects the bearing $\theta$ in accordance with equation (2).

$$\theta c(t) = \theta(t) - \delta ave \qquad \dots (2)$$

This makes it possible to accurately correct the bearing $\theta$ even when the navigation device 1 successively moves in the vehicle or even when the output signal of the magnetic sensor 12 fluctuates due to disturbance, for example.
As described above, the bearing correction unit 101 corrects the bearing $\theta(t)$ presently output from the magnetic sensor 12 by use of the already-calculated difference $\delta(T)$ or the average difference $\delta ave$. Thus, the bearing correction unit 101 outputs the corrected bearing $\theta c(t)$ precisely representing the running direction of the vehicle. That is, the bearing correction unit 101 determines the present running direction of the vehicle based on the bearing $\theta(t)$ presently output from the magnetic sensor. In short, the navigation device 1 can precisely detect the present running direction of the vehicle by use of the output signal of the magnetic sensor 12 even when the GPS unit 11 cannot receive GPS signals or even when the GPS unit 11 receives GPS signals having low precisions.
The position calculation unit 102 successively receives the corrected bearing $\theta c(t)$ from the bearing correction unit 101 as well as the position $P_{GPS}$ and the speed V of the vehicle from the GPS unit 11. The position detection unit 102 stores the newest values of the position PGPS and the speed V of the vehicle. When the GPS unit 11 normally receives GPS signals, the position calculation unit 102 outputs the position $P_{GPS}$ to the CPU 10 executing the navigation software. When the GPS unit 11 fails to receive GPS signals (e.g. when the vehicle runs through a tunnel, for example), the position calculation unit 102 calculates the present position $P_{MAG}$ of the vehicle based on the newest values of the position $P_{GPS}$ and the speed V of the vehicle (stored in the position calculation unit 102) as well as the corrected bearing $\theta c(t)$ (presently output from the bearing correction unit 101) in accordance with equations (which will be described later); then, it outputs the present position $P_{MAG}$ of the vehicle to the CPU 10 executing the navigation software.
The position correction unit 102 successively updates the present position $P_{MAG}$ of the vehicle by use of the corrected bearing $\theta c(t)$ in certain time period in which the GPS unit 11 fails to receive GPS signals. Herein, the present position $P_{MAG}$ of the vehicle is calculated and updated by use of the fixed values of the position $P_{GPS}$ and the speed V (which are stored in the position calculation unit 102 at the preceding timing). That is, the position calculation unit 102 is capable of reproducing the present position of the vehicle by use of the corrected bearing $\theta c(t)$ (which is output from the bearing correction unit 101 based on the bearing $\theta(t)$ of the magnetic sensor 12) even when the GPS unit 11 fails to receive GPS signals.
The precision determination unit 103 determines whether or not the GPS unit 11 performs positional detection with high precision; then, the determination result is forwarded to the bearing correction unit 101. The navigation device 1 is designed such that, only when the precision determination unit 103 determines that the GPS unit 11 performs positional detection with high precision, the bearing correction unit 101 stores the running direction $\varphi$ (detected by the GPS unit 11) and the bearing $\theta$ (detected by the magnetic sensor 12), wherein it stores only certain values of the running direction $\varphi$, each of which is detected with high precision. This makes it possible for the bearing correction unit 101 to calculate the difference $\delta$ with high precision. Due to the provision of the precision determination unit 103 which evaluates the precision of positional detection of the GPS unit 11, it is possible to precisely correct the bearing $\theta$ and to precisely calculate the present position $P_{MAG}$ of the vehicle.
With the precision information which is used for the precision determination in the precision determination unit 103, it is possible to use the speed V and/or the DOP modulus given from the GPS unit 11, for example. Generally speaking, the positional detection based on GPS has certain errors. The GPS unit 11 calculates the running direction $\varphi$ including error based on the difference between two positions, wherein the calculation result of the running direction $\varphi$ may be greatly affected by errors in positional detection at a low running speed of the vehicle, while at a high running speed of the vehicle, it is possible to precisely calculate the running direction φ because of a dilution of errors in positional detection in affecting calculation of the running direction φ. For this reason, the precision determination unit 103 determines that the GPS unit 11 performs the positional detection with high precision when the speed V is above a prescribed threshold. When the DOP modulus is used as the precision information, the precision determination unit 103 determines that the GPS unit 11 performs the positional detection with high precision when the number of GPS signals received by the GPS unit 11 is above a prescribed threshold.

Next, the operation of the navigation device 1 will be described in detail with reference to FIG. 3. FIG. 3 is a flowchart showing the operation of the navigation device 1, in particular, the position calculation process executed by the CPU 10. In the following description, the prescribed number (e.g. ten ) of the difference δ between the running direction φ and the bearing θ (both belonging to the same time period) is retained in the array A that is stored in the memory 13.

In step S1, the CPU 10 clears the array A for the preparation of processing. In step S2, the CPU 10 acquires the position $P_{GPS}$, the speed V, and the running direction φ of the vehicle from the GPS unit 11 while acquiring the bearing θ from the magnetic sensor 12. When the GPS unit 11 receives GPS signals, it outputs data representative of the latitude and longitude thereof as the position $P_{GPS}$ of the vehicle. When the GPS unit 11 does not receive GPS signals, it outputs data representative of the uncertainty of position as the position $P_{GPS}$ of the vehicle. In step S3, the CPU 10 makes a decision as to whether or not the position $P_{GPS}$ of the vehicle corresponds to the data representative of the uncertainty of position. When the position $P_{GPS}$ of the vehicle corresponds to the data representative of the latitude and longitude, the flow proceeds to step S4. When it corresponds to the data representative of the uncertainty of position, the flow proceeds to step S8.

When the GPS unit 11 outputs the position $P_{GPS}$ of the vehicle corresponding to the data representative of the latitude and longitude, in other words, when the GPS unit 11 receives GPS signals, the CPU 10 performs a series of steps, which will be described below.

In step S4, the precision determination unit 103 (whose function is executed by the CPU 10) makes a determination based on the speed V of the vehicle (which is acquired in step S2) as to whether or not the output data of the GPS unit 11 have an adequately high precision. When it is determined that the output data have an adequately high precision, the precision determination unit 103 informs the bearing correction unit 101 of the determination result. In step S5, the bearing correction unit 101 (whose function is executed by the CPU 10) calculates the difference δ=θ-φ between the bearing θ and the running direction φ (both of which are acquired in step S2); then, it adds the value of the difference δ to the array A. Thus, while the GPS unit 11 receives GPS signals, the values of the difference δ representing the deviations between the bearing θ (detected by the magnetic sensor 12) and the running direction φ of the vehicle are sequentially stored in the array A.

In step S6, the position calculation unit 102 (whose function is executed by the CPU 10) stores the position $P_{GPS}$ of the vehicle including the latitude component $PN_0$ and the longitude component $PE_0$ as well as the speed V of the vehicle (all of which are acquired in step S2). On the other hand, when the precision determination unit 103 determines that the output data of the GPS unit 11 have a low precision in step S4, the flow directly proceeds to step S6 by skipping step S5, wherein the position calculation unit 102 stores the position $P_{GPS}$ and the speed V of the vehicle. This makes it possible for the position calculation unit 102 to normally store the newest data representing the position $P_{GPS}$ (including the latitude component $PN_0$ and the longitude component $PE_0$) and the speed of the vehicle. The aforementioned data and the contents of the array A are used for calculation processing (i.e. steps S4 to S6) of the position $P_{MAG}$ of the vehicle when the GPS unit 11 does not receive GPS signals.

Lastly, the flow proceeds to step S7 in which the position calculation unit 102 provides the navigation software (executed by the CPU 10) with the position $P_{GPS}$ (acquired in step S2) as the present position of the vehicle when the GPS unit 11 receives GPS signals. After completion of step S7, the CPU 10 waits for a prescribed time (e.g. one second); then, it repeats a series of steps starting from step S2 again.

The CPU 10 performs the following processing when the position $P_{GPS}$ corresponds to the data representative of the uncertainty of position, in other words, when the GPS unit 11 does not receive GPS signals. That is, the CPU 10 performs the following processing when the vehicle runs through a tunnel, for example.

After completion of steps S2 and S3, the flow proceeds to step S8 in which the bearing correction unit 101 refers to the array A (which stores multiple values of the difference δ calculated at the respective times in step S5) so as to calculate the average difference δave. In step S9, the bearing correction unit 101 corrects the bearing θ of the magnetic sensor 12 (which is acquired in step S2) in accordance with

equation (2), thus producing the corrected bearing θc. The bearing correction unit 101 outputs the corrected bearing θc to the position calculation unit 102, which in turn calculates the present position of the vehicle in steps S10 and S 11.

In step S10, the position calculation unit 102 calculates the latitude component VN and the longitude component VE of the present speed V of the vehicle based on the speed V (which is stored in the position calculation unit 102 in step S6 when the GPS unit 11 receives GPS signals) and the corrected bearing θc (representing the running direction of the vehicle corrected in step S9) in accordance with equations (3) and (4), which are made on the presumption that the speed V of the vehicle is constant.

$$VN = V \times \cos \theta c \qquad \ldots (3)$$

$$VE = V \times \sin \theta c \qquad \ldots (4)$$

Based on the latitude component VN and the longitude component VE of the speed V of the vehicle as well as the latitude component $PN_0$ and the longitude component $PE_0$ of the position $P_{GPS}$ of the vehicle (which are stored in step S6 when the GPS unit 11 receives GPS signals), the position calculation unit 102 calculates the latitude component PN and the longitude component PE of the present position of the vehicle in accordance with equations (5) and (6) in step S 11.

$$PN = PN_0 + \sin^{-1}\left(\frac{VN \times \Delta t}{R}\right) \qquad \ldots (5)$$

$$PE = PE_0 + \sin^{-1}\left(\frac{VE \times \Delta t}{R \times \cos PN_0}\right) \qquad \ldots (6)$$

In the above, $\Delta t$ designates a lapsed time between the present time and the timing of completing the preceding execution of step S 11 (or the timing of completing step S7 in the first cycle of the position calculation process of FIG. 3), and R designates the radius of the earth. When the CPU 10 executes step S11 two or more times, it uses the latitude component PN0 and the longitude component PE0, which are acquired in step S12.

In step S12, the position calculation unit 102 stores the calculated values of the latitude component PN and the longitude component PE as the new values of the latitude component $PN_0$ and the longitude component $PE_0$ of the position of the vehicle.

Lastly, the flow proceeds to step S 13 in which the position calculation unit 102 provides the navigation software (executed by the CPU 10) with the present position $P_{MAG}$=(PN,PE) of the vehicle when the GPS unit 11 does not receive GPS signals. After completion of step S13, the CPU 10 waits for the prescribed time (e.g. one second); then, it repeats a series of steps starting from step S2 again.

As described above, when the GPS unit 11 receives GPS signals, the CPU 10 directly provides the navigation software with the position $P_{GPS}$ of the vehicle detected by the GPS unit 11. When the GPS unit 11 does not receive GPS signals, the bearing correction unit 101 corrects the bearing θ of the magnetic sensor 12 based on the difference δ regarding the running direction φ of the vehicle so as to produce the corrected bearing θc, based on which the position calculation unit 102 calculates the present position $P_{MAG}$ of the vehicle; thus, the CPU 10 provides the navigation software with the present position $P_{MAG}$ of the vehicle. This makes it possible for the navigation device 1 to precisely detect the present position of the vehicle even when the vehicle runs through a tunnel and the GPS unit 11 cannot receive GPS signals.

In step S5 shown in FIG. 3, when the bearing correction unit 101 detects that the array A is fully filled with values of the difference δ, it is possible to overwrite the oldest value of the difference δ with the newest value of the difference δ, thus allowing the bearing correction unit 101 to calculate the average difference δave based on the latest ten values of the difference δ.

It is possible to modify the navigation device 1 to further include an angle detector (not shown) for detecting an installation angle thereof and an angle variation determination unit (not shown) for determining whether or not the detected installation angle is varied within a prescribed time. When the installation angle of the navigation device 1 is varied during the execution of the navigation process, in which the navigation device 1 operates in accordance with the flowchart of FIG. 3 so as to proceed to any one of steps, it is likely that the values of the difference δ stored in the array A are greatly varied, so that the previously stored values of the difference δ become useless. To cope with such a situation, when the angle variation determination unit detects variations of the installation angle detected by the angle detector within the prescribed time, the CPU 10 clears (or discards) all the values of the difference δ stored in the array A, then, the CPU 10 may proceed to the foregoing steps from step S2 shown in FIG. 3.

It is possible to additionally arrange a switch (not shown) in the navigation device 1. This makes it possible for the user to delete the difference δ registered with the array A by operating the switch. When the navigation device 1 has the aforementioned switch, it does not necessarily install the angle detector therein.

The present invention is not necessarily limited to the embodiment, which can be further modified in a variety of ways within the scope of the invention as defined in the appended claims; hence, the present invention may embrace a variety of design choices without departing from the essential elements thereof.

The present invention is preferably applicable to portable types of navigation devices but is also applicable to fixed types of navigation devices. In this connection, the term "vehicle" may embrace different types of machines such as automobiles, motorcycles, and bicycles.

**Claims**

1. A navigation device for detecting a position so as to perform positional guidance, comprising:

   a first detection device for detecting the position based on Global Positioning System and for detecting a running direction and a running speed based on a plurality of positions sequentially detected at different times;
   a second detection device for detecting a bearing thereof based on geomagnetism;
   a bearing correction unit for correcting the bearing of the second detection device by use of a difference between the running direction detected by the first detection device and the bearing detected by the second detection device, thus producing a corrected bearing; and
   a position calculation means for calculating a present position based on the corrected bearing as well as the position and the running speed previously detected by the first detection device.

2. A navigation device according to claim 1 further comprising a storage unit for storing the position and the running speed detected by the first detection device, wherein the position calculation unit calculates the present position based on the corrected bearing and the position and the running speed stored in the storage unit when the first detection device fails to detect the position.

3. A navigation device according to claim 1 further comprising a precision determination unit for determining a precision of the first detection device in detecting the position, wherein the bearing correction unit uses the difference produced only when the precision determination unit determines that the first detection device detects the position with high precision.

4. A navigation device according to claim 3, wherein the precision determination unit determines that the first detection device detects the position with high precision only when the running speed detected by the first detection device is above a prescribed threshold.

5. A navigation device according to claim 1, wherein an average difference is calculated based on a plurality of differences sequentially detected by the first detection device and the second detection device with respect to time, so that the bearing correction unit corrects the bearing of the second detection device by use of the average difference.

6. A navigation device according to claim 1 further comprising
   a second storage unit for storing the difference between the running direction detected by the first detection device and the bearing detected by the second detection device, and
   an angle detector for detecting an installation angle thereof,
   wherein the difference between the running direction and the bearing stored in the second storage unit are discarded when the angle detector detects variations of the installation angle.

7. A navigation device according to claim 1, wherein the first detection device is a GPS unit for detecting the position based on the Global Positioning System, and the second detection device is a magnetic sensor for detecting the bearing thereof based on the geomagnetism.

# FIG. 1

DISPLAY UNIT  16

AUDIO OUTPUT UNIT  17

CPU  10

COMMUNICATION UNIT  15

18

MEMORY  13

EXTERNAL STORAGE UNIT  14

MAGNETIC SENSOR  12

GPS UNIT  11

FIG. 2

# FIG. 3

```
                    ┌──────────────┐
                    │    START     │
                    └──────┬───────┘
                           ↓
              ┌─────────────────────────┐
              │     CLEAR ARRAY A       │──── S1
              └───────────┬─────────────┘
                          ↓
           ┌────────────────────────────────┐
           │      ACQUIRE P_GPS, V, φ        │
           │ FROM GPS UNIT, AND ACQUIRE θ    │──── S2
           │      FROM MAGNETIC SENSOR       │
           └───────────────┬────────────────┘
                           ↓
                          S3                           YES
              ◇ P_GPS UNCERTAIN ? ◇──────────────────────────┐
                           │ NO                              ↓
                          S4                    ┌──────────────────────────┐
              ◇ GPS UNIT PERFORMS ◇             │ CALCULATE δave of ARRAY A │── S8
      NO      ◇ POSITIONAL DETECTION ◇          └─────────────┬────────────┘
   ┌──────────◇ WITH HIGH PRECISION ◇                         ↓
   │          ◇         ?          ◇           ┌──────────────────────────┐
   │                  │ YES    S5              │     CORRECT BEARING       │── S9
   │          ┌──────────────────────────┐    │     AS θc = θ - δave       │
   │          │ ADD NEW VALUE OF δ=θ-φ    │    └─────────────┬────────────┘
   │          │       to ARRAY A          │                  ↓
   │          └──────────────────────────┘    ┌──────────────────────────┐
   │                  │           S6          │     CALCULATE VN, VE       │
   │                  ↓                        │      VN=V×cos θc           │── S10
   │  ┌──────────────────────────┐            │      VE=V×sin θc           │
   │  │ STORE P_GPS INCLUDING PN0,│            └─────────────┬────────────┘
   │  │       PE0, and V          │                          ↓      S11
   │  └─────────────┬────────────┘             ┌──────────────────────────┐
   │                │          S7              │      CALCULATE PN,        │
   │                ↓                          │      PE BY USE OF         │
   │  ┌──────────────────────────┐            │        VN, VE             │
   │  │      OUTPUT P_GPS         │            └─────────────┬────────────┘
   │  └─────────────┬────────────┘                          ↓
   │                │                          ┌──────────────────────────┐
   │                │                          │ STORE PN=PN0, PE=PE0      │── S12
   │                │                          └─────────────┬────────────┘
   │                │                                        ↓
   │                │                          ┌──────────────────────────┐
   │                │                          │ OUTPUT P_MAG=(PN, PE)     │── S13
   │                │                          └─────────────┬────────────┘
   │                └────────────────┬──────────────────────┘
   └─────────────────────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007245793 A

- JP H0942979 B